## Europäisches Patentamt

## European Patent Office

## Office européen des brevets

(11) Publication number: **0 100 235**
**B1**

(12) # EUROPEAN PATENT SPECIFICATION

(45) Date of publication of patent specification: **08.06.88**

(51) Int. Cl.⁴: **G 01 N 27/28,** G 01 N 1/00

(21) Application number: **83304307.8**

(22) Date of filing: **26.07.83**

(54) Liquid transport device.

(30) Priority: **26.07.82 US 401753**

(43) Date of publication of application:
**08.02.84 Bulletin 84/06**

(45) Publication of the grant of the patent:
**08.06.88 Bulletin 88/23**

(84) Designated Contracting States:
**DE FR GB**

(56) References cited:
**EP-A-0 010 456**
**EP-A-0 010 457**
**EP-A-0 034 049**

(73) Proprietor: **EASTMAN KODAK COMPANY**
**343 State Street**
**Rochester New York 14650 (US)**

(72) Inventor: **Columbus, Richard Lewis**
**230 Ambassador Drive**
**Rochester New York 14610 (US)**

(74) Representative: **Baron, Paul Alexander Clifford**
**et al**
**Kodak Limited Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention is directed to a liquid transport device comprising a passage for the capillary transport of liquid, and more specifically, to means for conveying liquid into such a passage.

European Patent No. 0010456 discloses liquid transport devices having apertures which are adapted to receive drops of liquid and convey the liquid to a capillary zone or passage; as described in this patent, such apertures are difficult to use if they are circular in shape, unless the drop of liquid is carefully centered in the aperture and the drop completely encompasses the aperture. If the drop is not centered in the aperture, the smooth cylindrical sidewalls of circular apertures tend to cause a drop of the liquid deposited over a portion of the aperture to draw away from the aperture. The surface tension of the liquid in such cases tends to push the liquid away from the aperture instead of into it.

The device described in European Patent No. 0010456 eliminates the problem of circular apertures by the use of apertures having special sidewall configurations which have been found to be very effective in urging a drop into an aperture. However, one problem with apertures having these special sidewall configurations is that such apertures are difficult to form in manufacturing the liquid transport devices. Thus, for liquid transport devices manufactured in large quantities, it is much more desirable to be able to form circular apertures.

An important element in metering liquid into liquid transport devices is the accuracy with which the liquid can be deposited in the aperture. The distance between the aperture center and the center of the deposited quantity of liquid is known as the metering error of displacement. It is impractical to reduce that error beyond a certain point by controlling tolerances of the metering apparatus and transport devices. The only other easily changed parameters are the quantity of deposited liquid and the size of the ingress aperture. The quantity of deposited liquid could be increased to ensure that the aperture is always encompassed by the circumference of the deposited liquid, as determined by a maximum expected error of displacement. However, such an approach could increase the requisite volume of deposited liquid from the presently preferred level of about 10 µl to an unacceptable level.

Merely increasing the size of the aperture to encompass the error of displacement is not a satisfactory solution because the drop could enter the aperture without contacting the upper surface of the capillary transport passage. In such a case, capillary flow would not occur in the transport passage. The other approach would be to hold the deposited liquid volume constant and reduce the aperture size. This could ensure that the aperture is encompased by the deposited liquid, even when the maximum error of displacement occurs. However, apertures significantly smaller than about 3 mm diameter have seveal drawbacks. The surface area contacted by the drop becomes so large, compared to the area of the aperture, that residual liquid tends to remain on the surface around the aperture, rather than drain into the aperture. Such behavoir alters the volume of the liquid that passes through the capillary passage, which in turn can produce errors if the liquid transport device is being used to detect analyte levels in a fluid. In addition, the relatively large surface area contacted by the drop of liquid tends to induce the drop to wander away from a position centered·on the aperture.

Thus, neither increasing the quantity of liquid relative to a fixed size of ingress aperture, nor decreasing the aperture size relative to a fixed quantity of deposited liquid, has been a satisfactory solution to the reliable use of circular ingress apertures.

In accordance with the present invention there is provided a liquid transport device comprising members which are arranged to define a passage for receipt of a liquid, one of said members having an exterior surface, said members having opposed surfaces for transporting liquid by capillary attraction along said passage, and access means for fluidly connecting said exterior surface and said passage so that liquid deposited on said exterior surface at said access means is transported to and along said passage characterized in that said access means comprises one or more clusters each of at least two apertures each extending from said exterior surface to said passage, only one of said apertures in the or each cluster having a maximum flow-through dimension that is sufficiently large as to allow a liquid deposited on said exterior surface to independently initiate transport of liquid within said passage, the other or others of said apertures having smaller maximum flow-through dimensions that permit liquid from said liquid deposited on said exterior surface to form a meniscus at a position where it is capable of coalescing with liquid advancing within said passage, but not of independently intiating transport of liquid within said passage, said apertures being positioned such that, when a liquid is placed on an aperture that allows independent initiation of transport, said liquid encompasses at least one other aperture in the same cluster.

It is an advantage of the present invention that proper wetting of a capillary transport passage can be obtained in a liquid transport device having a circular ingress aperture even when liquid is deposited on the device with a certain error of displacement. A related advantage of the present invention is that the ingress aperture can be of a size to be encompassed within a desired quantity of deposited liquid, and also provide satisfactory flow in a transport passage. Another advantage of the present invention is that an access means formed of a cluster of apertures provides more complete drainage into the transport passage so that minimal residual liquid is left on the exterior surface of the transport device. A further advantage of the invention, and one that is applicable whether the invention is applied to solve a displacement error problem or not, is that a cluster formed of an ingress aperture and smaller satellite apertures acts to slow down the rate of flow of liquid within the passage.

2

Embodiments of the present invention will now be described by way of example, with reference to the accompanying drawings in which:

Fig. 1 is a perspective view of a test element of a type in which the invention described herein can be employed;

Fig. 2 is a fragmentary vertical section view taken along the line II—II of Fig. 1 to which a drop of liquid has been added to illustrate the problem solved by the present invention;

Fig. 3 is a fragmentary plan view of a device constructed in accordance with the present invention;

Fig. 4 is a section view taken generally along the line IV—IV of Fig. 3;

Fig. 5 is a fragmentary section view similar to that of Fig. 4, but illustrating a comparative example; and

Fig. 6 is a plan view of an ion bridge incorporating the present invention.

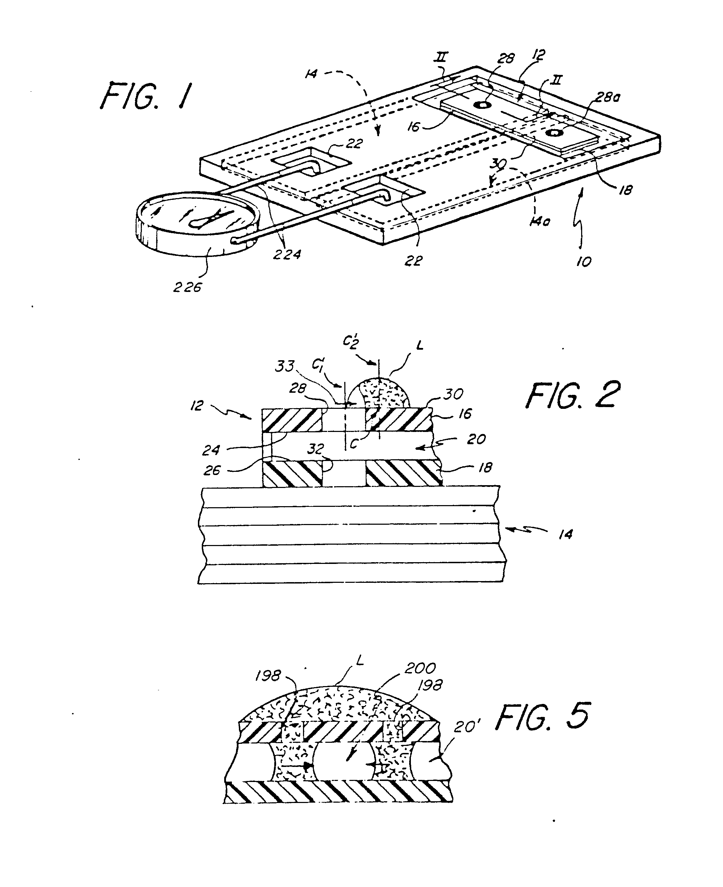

In Figs. 1 and 2, there is shown a potentiometric test element 10 as described in US—A—4,233,029. Test element 10 comprises an ion bridge 12 which is disposed above two ion-selective electrodes (ISE's) 14 and 14a. The bridge 12 comprises two members 16 and 18 spaced apart a distance effective to form a capillary transport passage 20 between opposing surfaces 24 and 26, (Fig. 2). Useful values for the spacing between members 16 and 18 range between 50 micrometres and 600 micrometres. Ingress apertures 28 and 28a are formed in member 16 (Fig. 1) and serve to connect exterior surface 30 of member 16 with passage 20. Each aperture 28 and 28a is disposed to receive a separate drop of liquid L. An aperture 32, formed in member 18, extends to ISE 14 and is preferably aligned with aperture 28, as shown in Fig. 2; likewise, a second aperture 32 (not shown) in member 18 extends to ISE 14a and is aligned with aperture 28a. Apertures 28 and 28a are of a size such that the liquid L deposited on surface 30 flows through the apertures 28 and 28a and will adequately wet passage 20 to ensure capillary flow therethrough, as is described in the aforesaid U.S. patent. A potentiometer 226, having leads 224 connected to electrodes 14 and 14a, is used to measure the potential developed in test element 10.

With reference to Fig. 2, a quantity of liquid L is shown on surface 30 in the form of a drop having a center C located on a center line $C'_2$. When aperture 28 is generally circular, and the center C on center line $C'_2$ is displaced from a center line $C'_1$ of aperture 28 so that the exterior boundary of the liquid L on surface 30 intersects, rather than encompasses, the circumference of aperture 28, the liquid L tends to remain on surface 30 (Fig. 2), rather than enter aperture 28. Under these conditions, the meniscus of the liquid L on surface 30 apparently encounters an energy barrier exerting a force on the liquid L, as indicated by an arrow 33 in Fig. 2. The liquid L thus is prevented from entering the aperture 28, and flow does not occur in passage 20.

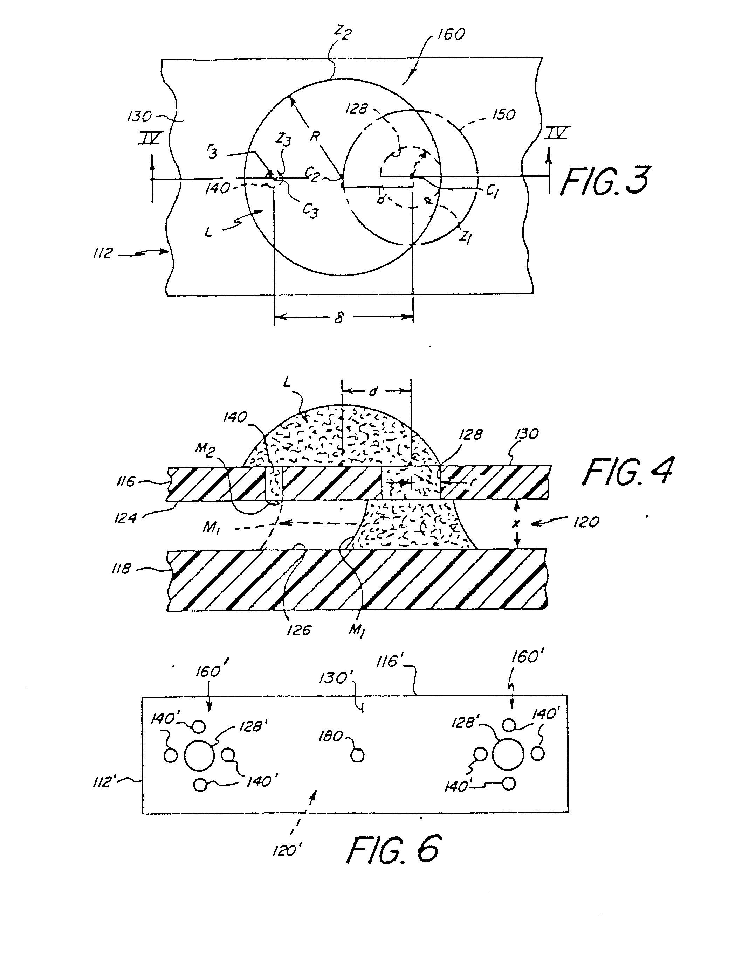

In Figs. 3 and 4, there is shown a liquid transport device 112 which avoids the problem described above. Device 112 comprises two members 116 and 118 spaced apart a distance x to provide a capillary transport passage 120, as is described in the aforesaid US—A—4,233,029. An access means 160 comprises an ingress aperture 128 connecting exterior surface 130 to passage 120. Aperture 128 has a radius r and a maximum flow-through dimension 2r which is preferably less than about 3 mm.

In accordance with the invention, access means 160 also comprises at least one satellite aperture 140 having a radius $r_3$; aperture 140 is formed in member 116 and extends from surface 130 to passage 120. The maximum flow-through dimension of any satellite aperture 140 is $2r_3$ which is smaller than dimension 2r of aperture 128 and is smaller than that which will allow liquid within aperture 140 to contact surface 126 (Fig. 4) which would result in flow within passage 120. With reference to Fig. 5, there is shown a comparative example in which flow has started within a passage 20' from two apertures 198; when this occurs, air is entrapped in a pocket 200 in passage 20'. Such entrapped air could interfere with subsequent processing; for example, if the air was entrapped in the ion bridge 12 shown in Fig. 1, erroneous results could occur.

The thickness of member 116 is selected in accordance with the wettability of the material used for member 116, such that liquid L penetrates through aperture 140 within a given time. Thus, the thickness is governed by the surface energetics of the material of member 116. If member 116 is polystyrene, for example, it should be no thicker than about 200 micrometres.

The dimensions of aperture 140 are selected so that the liquid within the aperture 140 penetrates passage 120 sufficiently to form a meniscus $M_2$ (Fig. 4) such that, when the advancing meniscus $M_1$ arrives at the position shown in dotted lines, meniscus $M_2$ coalesces with $M_1$. For such coalescence to occur at surface 124, meniscus $M_2$ is either generally convex, as shown, or generally concave. The particular shape of meniscus $M_2$ will depend primarily on the height of the liquid L above exterior surface 130. For apertures 128 and 140 that are circular in flow-through shape, that is the shape of apertures 128, 140, in a plane which extends transverse to the direction of the flow of liquid L through the apertures 128, 140, dimensions r and $r_3$ are radii. If apertures 128 and 140 are not circular (not shown), dimensions corresponding to r and $r_3$ are equal to one-half the maximum flow-through dimensions.

A second reason for the dimension $2r_3$ of aperture 140 being less than dimension 2r of aperture 128 is that, as the dimension $2r_3$ approaches the dimension 2r, it becomes more and more difficult to ensure that circumference $Z_3$ of aperture 140 falls within a circumference $Z_2$ of the deposited liquid L, as described hereinafter.

In accordance with the invention, aperture 128 is sized to always be within circumference $Z_2$. To this end, radius r is selected to be no larger than the difference between a predicted radius R of the contact area of liquid L deposited on surface 130, and a maximum expected error of displacement d of a center $C_2$ of liquid L from centre $C_1$ of aperture 128. This ensures that the circumference $Z_2$ (Fig. 3) will always

encompass circumference $Z_1$ of aperture 128. Stated mathematically, the relationship is, $R = \geq d + r$. The value of r (as shown in Figs. 3 and 4) is a maximum allowable value, and preferably aperture 128 has a radius r that is less than this value.

The maximum error of displacement d is a function of the tolerances inherent in the apparatus (not shown) used to deposit the liquid L on device 112, and of the tolerances within the device 112.

Center $C_1$ of aperture 128 (Fig. 3) represents the ideal location of the center $C_2$ of liquid L on surface 130. To be certain that the aperture 128 is always encompassed by liquid L, the device 112 is positioned relative to the metering apparatus (not shown) so that aperture 128 is within circumference $Z_1$. That is, for an aperture 128 having a diameter slightly smaller than 2r, which is the "worst case", $Z_1$ becomes a hypothetical circle within which the actual aperture 128 of a radius less than r, is located.

Examples of useful values for $r \leq R-d$, in systems having a displacement error d of .125 mm and drop volume to 10 µl, are indicated below:

| Material of Surface 130 | d | R | $r \leq (R-d)$ |
|---|---|---|---|
| Cellulose acetate | 0.125 mm | 2.1 mm | 1.9 mm |
| polystyrene | 0.125 mm | 1.9 mm | 1.7 mm |

To ensure that at least one satellite aperture 140 is also completely encompassed by the liquid L deposited on surface 130, the center $C_3$ of an aperture 140 is preferably displaced from the centre $C_1$ by a distance δ (Fig. 3) that is no greater than that which will ensure that circumference $Z_3$ of aperture 140 falls within and is encompassed by the circumference $Z_2$. For example, for an aperture 140 to be properly located when displacement is to the left of center $C_1$ (Fig. 3), the relationship is $δ \leq R-r_3 + d$.

The exact range of values to be selected for $r_3$, in keeping with the aforementioned guidelines, depend on several factors, including the spacing x of the passage 120 and the head of liquid L on surface 130. Assuming that 10 µl is the preferred quantity for the liquid L on surface 130, it can be shown that the head of the liquid L on surface 130 (Fig. 4) will always be less than the head necessary to force the liquid meniscus $M_2$ to form a hemispherical protuberance (not shown) into passage 120. Therefore, under the preferred conditions of use, a hemispherical protuberance (not shown) represents a "worst case" such that if $r_3$ of aperture 140 were to be equal to spacing x, flow from aperture 140 would be initiated within passage 120. To avoid this "worst case", $r_3$ of aperture 140 should be less than spacing x. It will be readily appreciated that the preferred values for $r_3$ are much less than the aforementioned maxima. Thus, for aperture 128 having a radius r of between 0.75 mm and 1.15 mm, and most preferably 0.95 mm, aperture 140 preferably has a radius $r_3$ between 0.05 mm and 0.125 mm and most preferably 0.075 mm.

When meniscus $M_1$ coalesces with meniscus $M_2$, as noted above, a second flow path for liquid L is completed from the surface 130 into the passage 120. It is this coalescence which has been found to produce a reduction in the rate with which liquid L traverses passage 120. The energy and time needed to bring about the coalescence reduces the rate of flow into passage 120, and therefore the flow rate within the passage 120. The reduction in drainage rate resulting from the coalescence of liquid L in passage 120 was an unexpected result of the present invention.

Since the direction of the error of displacement d is usually unknown, it is preferable to place more than one satellite aperture 140 around aperture 128, with aperture 128 located approximately in the center relative to apertures 140. The spacing of the satellite apertures 140 is selected on the basis that the locus of center $C_2$ is to be found on or within a circle 150, shown as a dot-dash line Fig. 3, having a radius equal to the maximum error of displacement d. Most preferably, apertures 140 are spaced so that, no matter where within circle 150 the center $C_2$ falls, circumference $Z_2$ will encompass at least one aperture 140. A preferred arrangement is a cluster of apertures 128, 140, which is comprised of four satellite apertures 140 evenly spaced around aperture 128. The preferred distance δ of the center $C_3$ of each aperture 140 from $C_1$ is between 1.25 mm and 1.6 mm, and most preferably 1.5 mm.

The use of one or more apertures 140 has been found to produce several advantages. One advantage is that apertures 140 act to "pin down" the deposited quantity of liquid L, preventing it from wandering over the surface 130 when device 112 is jarred or vibrated. Another advantage is that the use of apertures 140 produces more uniform and complete drainage or penetration of the liquid L into the passage 120. A third advantage is the reduced rate of flow, as discussed above.

Device 112 is useful for a variety of transport purposes, and a preferred use is in an ISE test element of the type, for example, of element 10 shown in Fig. 1. With reference to Fig. 6, there is shown an ion bridge 112' having two access means 160', each access means 160' comprising a cluster formed of a center aperture 128' and four satellite apertures 140'. An air vent 180 is preferably provided, generally centered between access means 160', to allow the escape of entrapped air. In use, a drop of a liquid L, such as blood serum, is deposited at one of the access means 160' to encompass all of the aperture 128' and at least one satellite aperture 140'; and at the other access means 160', a drop of liquid L, for example reference liquid, is similarly deposited. Preferably, the depositions of the two drops of liquid L take place at about the same time. When the liquid L from the two access means 160' meets by flowing within a passage 120' under member 116', an electrical circuit is completed; potentiometric measurements can then be taken as is described in US—A—4,233,029.

The preferred embodiments are described herein in connection with liquid L deposited on devices 112 and 112' in the form of a drop. In addition, the invention is useful when liquid L is transferred to the device 112 without assuming the form of a drop. The preferred embodiments also refer to the area of surface 130 contacted by liquid L as being generally circular. Whether in fact the area is circular depends on whether the exterior surface 130 is generally smooth, as in the preferred embodiments; the invention is also applicable to a surface 130 on which the liquid L assumes a non-circular shape. Further, the preferred embodiments herein described refer to the use of the invention in an ion bridge 112' wherein the ingress aperture 128' is circular. Ingress apertures (not shown) having elliptical and polygonal shapes are also useful, particularly those having axisymmetry or a plane of symmetry.

## Examples

The following examples further illustrate the invention.

### Examples 1—2

A device having a capillary passage was constructed using a nominally smooth sheet of polyethylene terephthalate as the bottom sheet, and a nominally smooth sheet of triacetate as the top sheet. The sheets were mounted so as to be spaced apart about 50 micrometres. Three such devices were prepared, each device having a different pattern of apertures in the top sheet. In a device used for a Control, a single circular ingress aperture was punched with a radius of about 0.76 mm. In a device used for Example 1, in addition to a circular ingress aperture, four circular satellite apertures were punched 90° apart around the ingress aperture with radii of 0.076 mm and centers 1.5 mm from the center of the ingress aperture. (See the arrangement of apertures in Fig. 6). In a device used for Example 2, the pattern of Example 1 was duplicated and four additional satellite apertures of identical dimensions were added, evenly spaced among the first four satellite apertures; thus, the satellite apertures were spaced 45° apart. A drop of 10 µl of water was placed over the ingress aperture in each case, and over at least one satellite aperture in Examples 1 and 2, and the rate of drainage into the passage was timed. Drainage into the capillary passage was determined to have ended when there remained no head of liquid in the center aperture to continue driving the flow. The following Table sets forth the results:

TABLE

| Example | No. of Satellite Apertures | Equivalent Flow-Through Diameter*(cm) | Drainage time into capillary passage (sec.) (±20%) |
|---|---|---|---|
| (Control) | 0 | 0.152 | 4 |
| 1 | 4 | 0.155 | 7 |
| 2 | 8 | 0.158 | 8 |

$* = (\Sigma \text{ Area of holes. } 4/\pi)^{1/2}$

Thus, notwithstanding that the equivalent flow-through diameters increased slightly, the drainage time increased when more satellite apertures were present. This delay in drainage time is advantageous in that it provides a means for controlling flow in devices where rapid flow might cause undesirable test results. For example, if flow occurs too rapidly in deviced 112' from one access means 160' to the other access means 160' contamination can result. The delay is a feature of the invention that is useful whether or not the invention is applied to solve a displacement error problem as described herein. In such a use, the aperture arrangement can have any shape, not just a symmetrical one, and the larger aperture is as large as, or smaller than, those already described in the US—A—4,233,029.

## Claims

1. A liquid transport device comprising members (116, 118; 116') which are arranged to define a passage (120; 120') for receipt of a liquid, one of said members (116; 116') having an exterior surface (130, 130'), said members (116, 118; 116') having opposed surfaces (124, 126) for transporting liquid by capillary attraction along said passage (120; 120'), and access means (160; 160') for fluidly connecting said exterior surface (130; 130') and said passage (120; 120') so that liquid deposited on said exterior surface (130; 130') at said access means (160; 160') is transported to and along said passage (120; 120') characterized in that said access means (160; 160') comprises one or more clusters each of at least two apertures (128, 140; 128', 140') each extending from said exterior surface (130; 130') to said passage (120; 120'), only one of said apertures (128; 128') in the or each cluster having a maximum flow-through dimension (2r) that is sufficiently large as to allow a liquid (L) deposited on said exterior surface (130; 130') to independently initiate transport of liquid within said passage (120; 120'), the other or others (140; 140') of said apertures having smaller maximum flow-through dimensions ($2r_3$) that permit liquid from said liquid (L) deposited on said exterior surface (130; 130') to form a meniscus ($M_2$) at a position where it is capable of coalescing with liquid advancing within said passage (120; 120'), but not of independently initiating transport of liquid within said passage (120; 120'), said apertures (128, 140; 128', 140') being positioned such that, when a liquid (L) is placed on an aperture (128; 128') that allows independent initiation of transport, said liquid (L) encompasses at least one other aperture (140; 140') in the same cluster.

2. A device according to claim 1, characterized by a cluster comprising at least four of said other apertures (140; 140') disposed around one aperture (128; 128') that allows independent initiation of transport.

3. A device according to claim 1 or 2, characterized in that at least said aperture or apertures (128; 128') that allows or allow independent initiation of transport has a circular flow-through shape.

4. A device according to any one of the preceding claims, characterized in that all of said apertures (128, 140; 128', 140') have a circular flow-through shape.

5. A device according to any one of the preceding claims, characterized in that, for a quantity of liquid of 10 µl which, in use, covers a contact area on the exterior surface (130; 130') thereof having a radius (R) of 2.1 mm, said one member (116; 116') is made from cellulose acetate and one-half of said maximum flow-through dimension (2r) of said aperture (128; 128') that allows independent initiation of transport is no larger than 1.9 mm.

6. A device according to any one of claims 1 to 4, characterized in that, for a quantity of liquid of 10 µl which, in use, covers a contact area on the exterior surface (130; 130') thereof having a radius (R) of 1.9 mm, said one member (116; 116') is made from polystyrene and one-half of said maximum flow-through dimension (2r) of said aperture (128; 128') that allows independent initiation of transport is no larger than 1.7 mm.

**Patentansprüche**

1. Flüssigkeitstransportvorrichtung mit Elementen (116, 118; 116'), die so angeordnet sind, daß sie eine Bahn (120; 120') für die Aufnahme einer Flüssigkeit bilden, wobei eines der Elemente (116; 116') eine Außenfläche (130; 130') aufweist und die Elemente (116, 118; 116') einander gegenüberliegende Flächen (124, 126) besitzen, um die Flüssigkeit durch Kapillarwirkung über die Bahn (120; 120') zu transportieren, sowie Einlaßmittel (160; 160'), durch die eine Strömungsverbindung zwischen der Außenfläche (130; 130') und der Bahn (120; 120') hergestellt ist, so daß auf der Außenfläche (130; 130') an den Einlaßmitteln (160; 160') aufgebrachte Flüssigkeit zu der Bahn (120; 120') gelangt und in ihr transportiert wird, dadurch gekennzeichnet, daß die Einlaßmittel (160; 160') aus einer oder mehreren Gruppen von jeweils mindestens zwei Öffnungen (128, 140; 128', 140') bestehen, von denen sich jede von der Außenfläche (130; 130') aus bis zu der Bahn (120; 120') erstreckt, wobei nur eine Öffnung (128; 128') pro Gruppe eine maximale Durchflüßabmessung (2r) besitzt, die ausreicht, damit eine auf die Außenfläche (130; 130') aufgebrachte Flüssigkeit (L) von selbst einen Flüssigkeitstransport in der Bahn (120; 120') bewirkt, während die andere Öffnung bzw. die anderen Öffnungen (140; 140') eine geringere maximale Durchflußabmessung ($2r_3$) besitzen, die es Flüssigkeit aus der auf die Außenfläche (130, 130') aufgebrachten Flüssigkeitsmenge (L) ermöglicht, einen Meniscus ($M_2$) an der Stelle zu bilden, an der sie mit der sich in der Bahn (120; 120') vorwärtsbewegenden Flüssigkeit zusammenfließen kann, jedoch nicht von selbst einen Flüssigkeitstransport in der Bahn (120; 120') zu bewirken, und daß die Öffnungen (120, 140; 128', 140') so angeordnet sind, daß beim Aufbringen einer Flüssigkeit (L) auf eine Öffnung (128; 128'), die es erlaubt, daß von selbst ein Flüssigkeitstransport bewirkt wird, die Flüssigkeit (L) mindestens noch eine andere Öffnung (140; 140') derselben Gruppe umgibt.

2. Vorrichtung nach Anspruch 1, gekennzeichnet durch eine Gruppe mit mindestens vier Öffnungen (140; 140'), die rund um die Öffnung (128; 128') angeordnet sind, die es ermöglicht, daß die Flüssigkeit von selbst einen Flüssigkeitstransport bewirkt.

3. Vorrichtung nach Anspruch 1 oder 2, dadurch gekennzeichnet, daß mindestens die Öffnung oder die Öffnungen (128; 128'), die es ermöglicht oder ermöglichen, daß von selbst ein Flüssigkeitstransport bewirkt wird, eine runde Durchflußform aufweist bzw. aufweisen.

4. Vorrichtung nach einem der vorhergehenden Ansprüche, dadurch gekennzeichnet, daß alle Öffnungen (128, 140; 128', 140') eine runde Durchflußform aufweisen.

5. Vorrichtung nach einem der vorhergehenden Ansprüche, dadurch gekennzeichnet, daß für eine Flüssigkeitsmenge von 10 µl, die beim Aufbringen auf die Außenfläche (130; 130') eine Berührungsfläche mit einem Radius (R) von 2,1 mm bedeckt, das Element (116; 116') aus Celluloseacetat hergestellt ist, und die Hälfte der maximalen Durchflußabmessung (2r) der Öffnung (128; 128'), die es ermöglicht, daß der Flüssigkeitstransport von selbst bewirkt wird, nicht größer ist als 1,9 mm.

6

6. Vorrichtung nach einem der Ansprüche 1 bis 4, dadurch gekennzeichnet, daß für eine Flüssigkeitsmenge von 10 µl, die beim Aufbringen auf die Außenfläche (130; 130') eine Berührungsfläche mit einem Radius (R) von 1,9 mm bedeckt, das Element (116; 116') aus Polystyrol hergestellt ist, und die Hälfte der Durchflußabmessung (2r) der Öffnung (128; 128'), die es ermöglicht, daß der Flüssigkeitstransport von selbst bewirkt wird, nicht größer ist als 1,7 mm.

**Revendications**

1. Dispositif de transport de liquide comprenant des organes (116, 118; 116') agencés de manière à définir un passage (120; 120') pour recevoir le liquide, un des organes (116; 116') présentent une surface externe (130; 130') lesdits organes (116, 116; 116') présentent des surfaces en regard (124, 126) pour transporter le liquide par capilarité le long dudit passage (120; 120'), et des moyens d'accès (160; 160') pour relier ladite surface externe (130; 130') et ledit passage (120; 120') de manière que le liquide déposé sur la surface externe (130; 130') au niveau des moyens d'accès (160; 160') soit transporté vers ledit passage et le long dudit passage (120; 120'), dispositif caractérisé en ce que les moyens d'accès (160; 160') comprennent un ou plusieurs amas d'au moins deux ouvertures chacun (128, 140; 128', 140'), chaque ouverture s'étendant de ladite surface externe (130; 130') audit passage (120; 120'), une seule des ouvertures (128; 128') de chaque amas présente une dimension maximale (2r) pour la section d'écoulement suffisemment importante pour permettre au liquide (L) déposé sur la surface externe (130; 130') d'initialiser de manière indépendante le phénomène de transport du liquide dans ledit passage (120; 120'), l'autre ou les autres ouvertures (140; 140') présentant une dimension (2r₃) pour la section d'écoulement plus petite de manière à permettre au liquide venant du liquide (L) déposé sur la surface externe (130; 130) d'une part de former un ménisque (M2) en une position où il est capable de se réunir avec le liquide avançant dans ledit passage (120; 120') mais d'autre part empécher l'initialisation indépendante du phénomène de transport de liquide à l'intérieur dudit passage (120; 120'), lesdits ouvertures (128, 140; 128', 140') étant disposés de manière que, lorsqu'on dépose un liquide (L) sur l'une des ouvertures (128; 128') qui permettent l'initialisation de l'écoulement dans le passage, ledit liquide (L) recouvre au moins l'une des autres ouvertures (140; 140') du même amas.

2. Dispositif conforme à la revendication 1, caractérisé en ce qu'un amas comprend au moins quatre desdites autres ouvertures (140; 140') disposées autour de ladite ouverture permettant l'initialisation indépendante de l'écoulement dans ledit passage.

3. Dispositif conforme à l'une quelconque des revendications 1 ou 2, caractérisé en ce que au moins les ouvertures (128; 128') permettant l'initialisation indépendante de l'écoulement dans le passage présentent une section d'écoulement circulaire.

4. Dispositif conforme à l'une quelconque des revendications précédentes, caractérisé en ce que toutes les ouvertures (128, 140; 128', 140') présentent une section d'ecoulement circulaire.

5. Dispositif conforme à l'une quelconque des revendications précédentes, caractérisé en ce que, pour une quantité de liquide de 10 µl qui, en utilisation, couvre une zone de contact de la surface externe (130; 130') en présentant un rayon (R) de 2,1 mm, lo'organe (116; 116') est en acétate de cellulose et l'ouverture (128; 128') premettant l'initialisation indépendante de l'écoulement dans la demi-dimension maximale est inférieure à 1,9 mm.

6. Dispositif conforme à l'une des revendications 1 à 4, caractérisé en ce que, pour une quantité de liquide de 10 µl qui, en utilisation couvre une zone de contact de la surface externe (130; 130') en présentant un rayon (R) de 1,9 mm, l'organe (116; 116') est en polystyrène et l'ouverture (128; 128') permettant l'initialisation indépendante de l'écoulement dans le passage présente une section d'écoulement dont la demi-dimension maximale est inférieure à 1,7 mm.

7

FIG. 1

FIG. 2

FIG. 5

FIG.3

FIG.4

FIG.6